# EUROPEAN PATENT SPECIFICATION

(11) **EP 3 441 837 B1**
(45) Date of publication and mention of the grant of the patent: **15.11.2023**
(21) Application number: 17185050.6
(22) Date of filing: 07.08.2017
(51) Int. Cl.: G05D 1/00, G05D 1/10, G08G 5/00

(54) **UNMANNED VEHICLES**
UNBEMANNTE FAHRZEUGE
VÉHICULES SANS PILOTE

(43) Date of publication of application: 13.02.2019
(73) Proprietor: Nokia Solutions and Networks Oy, 02610 Espoo (FI)
(72) Inventor: SUVITIE, Arto, 00930 Helsinki (FI)
(74) Representative: Page White Farrer

(56) References cited:
- WO-A1-2013/059513
- WO-A2-2009/146199
- US-A1- 2002 196 787
- US-A1- 2013 289 858
- US-A1- 2016 155 339
- US-A1- 2016 381 596

## Description

### Field of the Invention

The present invention is directed towards methods, apparatuses and computer program products for unmanned vehicles and/or their control thereof.

### Background

Unmanned vehicles, such as aerial vehicles (e.g. unmanned aerial vehicles (UAVs), or unmanned vehicles), land vehicles and collaborative robots are vehicles that are operated without a human operator on board.

An unmanned vehicle may have some degree or no degree of autonomous control. For example, an unmanned vehicle would have no degree of autonomous control if a user/operator is, in real-time, controlling the movement of the unmanned vehicle. An unmanned vehicle may be described as being at least semi-autonomous if the unmanned vehicle is configured to receive instructions related to a task/mission, and is configured to use real-time sensor data to achieve the set of objectives that are specified by the instructions. The sensor data may be received from sensors located on the unmanned vehicle, or from an external apparatus to the unmanned vehicle.

Unmanned vehicles may be used to execute a variety of different missions. For example, they may be deployed to collect data from a plurality of different areas (e.g. either from sensors on board the unmanned vehicles, or through collecting data from sensors located outside the reach of a traditional communications network), they may be used to deliver and/or collect objects, and collect/stream video data as they move. These missions may be performed by an individual unmanned vehicle, or by a collection of unmanned vehicles acting to achieve a common objective/mission (i.e. a swarm of unmanned vehicles). In that case, there is a need for controlling unmanned vehicles, which might be using different control protocols.

International patent application publication number WO 2013/059513 A1 relates to a robot control and gateway system that seeks to enable flexible control, advanced network topologies, and complex processing utilizing existing robotic platforms. A gateway device includes at least one robot communication module configured to control a robot in a communication protocol native to the robot, the at least one robot communication module including a robot control radio, at least one client communication module configured to receive commands related to the operation of the robot from a common controller, and a processor in communication with the at least one robot communication module and the at least one client communication module, the processor adapted to receive commands from the at least one client communication module, translate the received commands, and transmit the translated commands to the at least one robot communication module.

United States patent application publication number US 2016/155339 A1 relates to an apparatus directed towards providing semi-autonomous vehicle control of a vehicle includes a distributed mission module configured to modify a mission element of a group mission based on availability of data.

United States patent application publication number US 2002/196787 A1 relates to providing a communication node comprising a receiver for receiving packets and a routing device for routing the received packets to one of two output ports. For each output port, the communication node further comprises a classifier for classifying a received packet based on its traffic characteristic and storing that packet in a corresponding queue for that traffic characteristic, and a concatenated packets preparer for concatenating n received packets from each queue to form a concatenated packet to be transmitted by the associated output port, where the maximum of n is determined based on the traffic characteristic of the associated queue

### Summary

The present invention is defined by the appended independent claims. Certain more specific aspects are defined by the dependent claims.

### Figures

Some embodiments will now be described in further detail, by way of example only, with reference to the following examples and accompanying drawings, in which:
Figure 1 illustrates various communication connections between a ground control station and a swarm of unmanned vehicles;
Figure 2 shows example waypoints for a swam of unmanned vehicles;
Figure 3 illustrates communications exchanged between a ground control station and a swarm of unmanned vehicles;
Figure 4 shows illustrates communications exchanged a swarm of unmanned vehicles;
Figure 5 is a flowchart of example actions performed by an apparatus;
Figure 6 is a flowchart of example actions performed by an apparatus;
Figure 7 is a flowchart of example actions performed by an unmanned vehicle;
Figure 8 is a flowchart of example actions performed by an unmanned vehicle;
Figure 9 illustrates different sizes and shapes of volumes that may be monitored by an unmanned vehicles; and
Figure 10 shows an example apparatus in which any of the aspects may be performed.

### Detailed description

In general, the following relates to unmanned vehicles. It has particular application when an unmanned vehicle is configured to operate as part of a swarm of unmanned vehicles (e.g. if the unmanned vehicle is configured to, with other unmanned vehicles of the swarm, act to achieve a common objective/mission). The mission may be defined by at least one waypoint, which is a physical location to be visited by at least one unmanned vehicle in the swarm. One of the unmanned vehicles may be designated as the leader of the swarm (or at least be designated as the leader at a particular time instance). The leader of the swarm is configured to maintain and transmit mission progress information to the other members of the swarm, such as the current waypoint to be navigated to. Thus, all of the below-described aspects may be applied to multiple unmanned vehicles that are acting to complete the same mission.

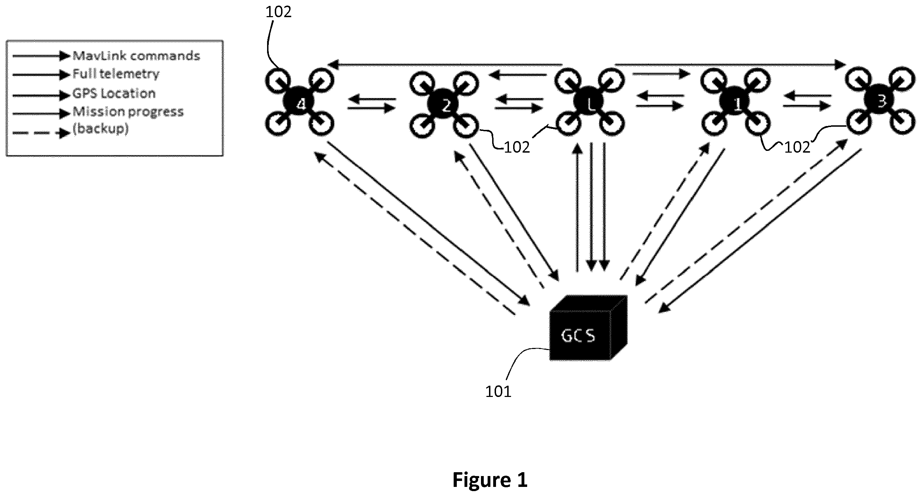

When an unmanned vehicle is part of a swarm, the unmanned vehicle needs to be aware of the progress of the mission and to keep formation with other unmanned vehicles in the swarm. In order to prevent collision with other unmanned vehicles in the swarm, each unmanned vehicle in the swarm may share their location data (and optionally their orientation) with other unmanned vehicles in the swarm. Depending on the type of unmanned vehicle, an unmanned vehicle may have up to six degrees of freedom in motion: three degrees of translational freedom and three degrees of rotational freedom, any of which may be exchanged. This may be done directly (e.g. through an unmanned vehicle-unmanned vehicle connection) or indirectly (e.g. via a ground control station). These types of connections are illustrated with respect to Figure 1.

Figure 1 illustrates a ground control station 101 that is configured to communicate with five unmanned vehicles 102 that form a swarm. One of these unmanned vehicles (labelled "L" in Figure 1) is configured to act as the leader of the swarm.

The leader is configured to transmit information on the progress of the mission to every other unmanned vehicle in the swarm. Further, each swarm member is configured to exchange location information received e.g. from GPS with its nearest physical neighbour in the swarm.

The ground control station 101 is configured to receive telemetry information from each of the unmanned vehicles in the swarm. Further, the leader unmanned vehicle is configured to transmit mission progress information (e.g. current waypoint and remaining distance) to the ground control station 101. The leader is also configured to receive mission control information from the ground control station, whilst the other unmanned vehicles 102 in the swarm may receive backup mission progress information, in the event that something happens to the leader unmanned vehicle. This backup information may be transmitted at a longer periodicity than the mission control information transmitted to the leader. The mission control information may be transmitted as Micro Air Vehicle Link (MAVLink) commands.

MAVLink is an open source, point-to-point communication protocol used between a ground control station and unmanned vehicles to carry telemetry and to command and control unmanned vehicles. It may be used to transmit the orientation of an unmanned vehicle, its GPS location and speed. The current form of the MAVLink message has a maximum length of 17 bytes, consisting of a 6 bytes header, 9 bytes payload and 2 bytes checksum (acknowledgments do not comprise a payload and thus have the minimum size of 8 bytes). The exact form of the MAVLink protocol is not static, and may evolve/change over time. The MAVLink protocol operates at the application layer. MAVLink is merely one example of a protocol operating at this level for this purpose, and other protocols may be used instead of this.

Information exchange for mission synchronisation may thus considered for three different scenarios.

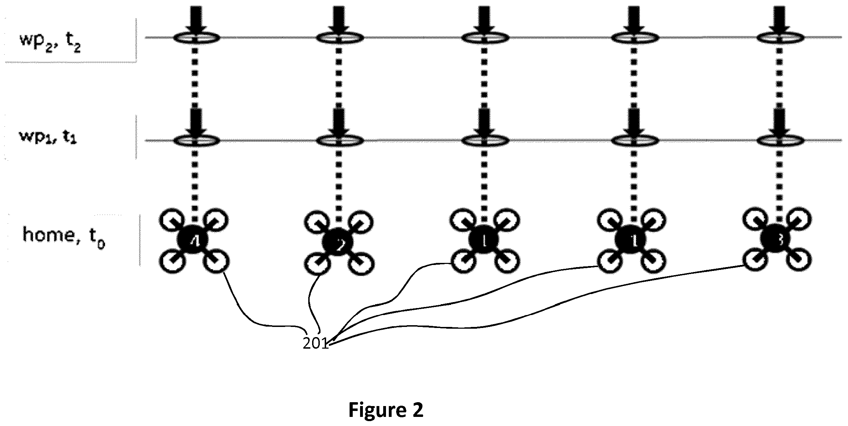

In a first scenario, illustrated with respect to Figure 2, mission synchronisation information is exchanged in a connectionless environment.

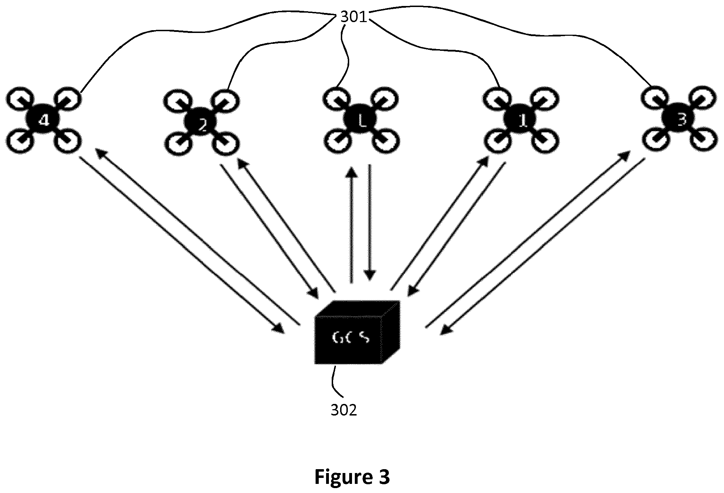

Figure 2 depicts two waypoints wp1, wp2, as horizontal lines. Each waypoint wp1, wp2 is associated with a respective time t1, t2, which represents a time at which the swarm should reach that associated waypoint. At the bottom of Figure 3, five unmanned vehicles are depicted 201, with the central unmanned vehicle being labelled "L" to denote that it is currently configured to act as the leader of the swarm. The position of the swarm at the bottom of Figure 2 denotes a "home"/initial location at a time t0, which occurs before times t1 and t2.

When the mission synchronisation is to be performed in a connectionless environment, unmanned vehicle-specific waypoints are loaded into respective unmanned vehicles in advance. Thus, for any unmanned vehicle in the swarm, the values of wp1, t1 and/or wp2, t2 may be different compared to at least one other unmanned vehicle in the swarm. In other words, the physical location of the waypoints and/or the time a swarm member is supposed to reach a waypoint may be different between members of the same swarm.

The times may be defined for each waypoint according to an anticipated flight speed and waypoint distance from a previous waypoint. The mission will be synchronised in real-time offline by each unmanned vehicle. Each unmanned vehicle must synchronise its on-board computer to the same mission start time to ensure coordinated movement during the mission.

In a second scenario, illustrated with respect to Figure 3, the mission synchronisation information is exchanged using connections between a ground control station and the swarm members.

Figure 3 depicts five unmanned vehicles 301, with the central unmanned vehicle being labelled "L" to denote that it is currently configured to act as the leader of the swarm. Below the leader unmanned vehicle, a ground control station 302 is depicted. Arrows indicating an exchange of information between the ground control station and each of the unmanned vehicles is also shown.

In this scenario, the unmanned vehicle movement is synchronised according to waypoint distances. The ground control station 302 monitors the progress of all unmanned vehicles 301 in real-time, and transmits individual instructions to adjust the flight speed of a particular unmanned vehicle 301 when necessary. The transmitted instructions may or may not be the direct result of an operator providing those instructions in real-time.

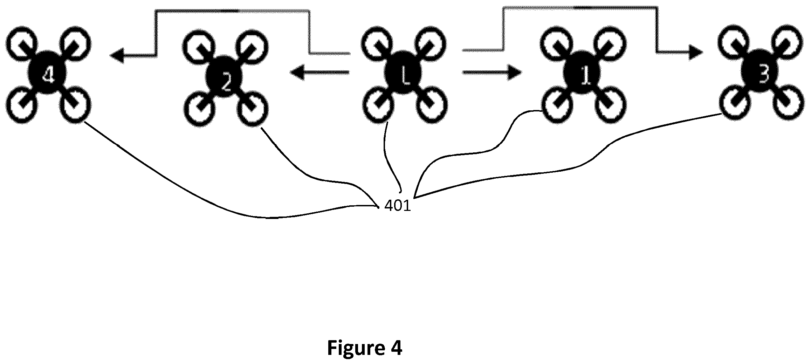

In a third scenario, illustrated with respect to Figure 4, the mission synchronisation information is exchanged using the leader-to-swarm member connections.

Figure 4 depicts five unmanned vehicles 401, with the central unmanned vehicle being labelled "L" to denote that it is currently configured to act as the leader of the swarm. Arrows extending from the leader to respective swarm members indicate that the leader is configured to, in real-time, transmit mission progress information to each unmanned vehicle in the swarm. This mission progress information may comprise the current waypoint number, and the waypoint distance.

The inventor has realised that certain aspects of unmanned vehicle communication and operation may be improved upon.

To this effect, the following describes several aspects, which may be implemented in isolation or in combination with each other, for achieving the advantages described hereunder.

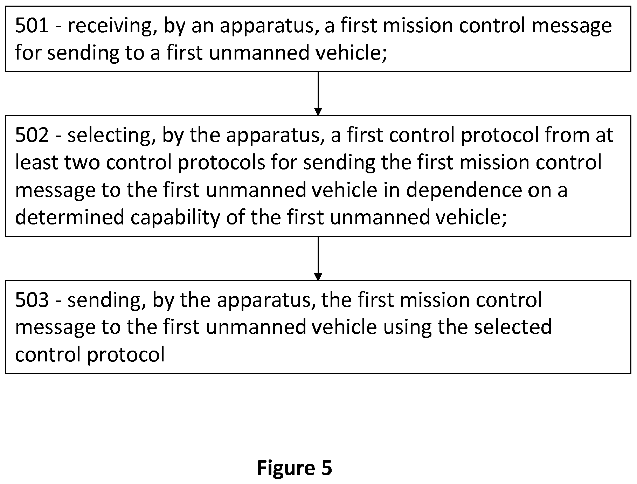

A first aspect is described in relation to Figure 5.

Figure 5 is a flow chart illustrating some potential operations that may be performed by an apparatus, such as a ground control station, that is configured to provide mission control information to a plurality of unmanned vehicles in a swarm. The term "apparatus" is used to denote that other entities than a ground control station may be configured to provide the mission control information. In the example of MAVLink protocol, the mission control information may be generated by software such as the Mission Planner software. Other software may be used to generate mission control information. In general, mission control information is used to control the movement of an unmanned vehicle. Examples include the provision of at least one waypoint in a mission, an instruction to change flight modes (e.g. from manual to autonomous), an instruction to arm/disarm/land/take off/start mission/stop mission, etc.). Thus, the apparatus described below may be thought of as at least one processor that is configured to execute computer code such that the described actions come into effect.

At 501, the apparatus is arranged to receive a first mission control message for sending to a first unmanned vehicle. The first mission control message may originate from the apparatus itself (e.g. as a result of an operator of the apparatus inputting an instruction to the apparatus). In this case, the first mission control message is received from another part of the apparatus, such as a user interface. The first mission control message may originate from an external apparatus, and be transmitted to the apparatus from the external apparatus using a physical layer transmission protocol.

At 502, the apparatus is arranged to select a first control protocol from at least two control protocols for sending the first mission control message to the first unmanned vehicle in dependence on a determined capability of the first unmanned vehicle. The control protocols may be configured for the application layer. Thus, one of the protocols may be, for example, MAVLink, whilst another of the protocols is a proprietary communication protocol (hereunder referred to in an example as Protocol1).

The determined capability of the first unmanned vehicle relates to the ability of the first unmanned vehicle to translate instructions received in accordance with the at least two control protocols. In accordance with one example outlined below, the determined capability relates, at least in part, to a determination as to whether or not the first unmanned vehicle is configured to autonomously execute collision avoidance mechanisms (i.e. whether or not the apparatus is configured to provide instructions for executing collision avoidance mechanisms to the first unmanned vehicle). This may be indicative as to whether or not the first unmanned vehicle comprises an onboard computer.

At 503, the apparatus is arranged to send the first mission control message to the first unmanned vehicle using the selected control protocol.

To illustrate various advantages of this aspect, an example is considered in which one of the control protocols is the MAVLink protocol, whilst another one of the control protocols is designated as Protocol1. Protocol1 is presumed to be a communication protocol used between ground control station and the onboard computer of the first unmanned vehicle. On receipt of a Protocol1 message, the onboard computer of the unmanned vehicle will generate autopilot-specific instructions from the given Protocol1 commands. However, if the first unmanned vehicle does not have the onboard computer installed, but still has connectivity to a communications network (e.g. Long Term Evolution/LTE connectivity via a dongle), then the ground control station may communicate with the autopilot of the first unmanned vehicle directly using the MAVLink protocol. In general, an onboard computer of an unmanned vehicle may be used to perform latency-critical functions, such as collision avoidance. Without such an onboard computer, an unmanned vehicle is configured to receive instructions relating to all functionality that comes with an autopilot by default from a ground control station. Therefore, an unmanned vehicle without an onboard computer must rely on collision avoidance monitoring and commands for executing collision avoidance from a ground control station. This can make collision avoidance less reliable, and requires a larger safety distance between unmanned vehicles. Consequently, Protocol1 may be used if it is determined that the unmanned vehicle has an onboard computer/is able to autonomously execute collision avoidance mechanisms, whilst MAVLink may be used if it is determined that the unmanned vehicle does not have an onboard computer/is currently unable to autonomously execute collision avoidance mechanism.

This aspect may be extended where at least two unmanned vehicles in the same swarm have different configurations (e.g. where one unmanned vehicle supports MAVLink instructions/does not support Protocol1 instructions whilst another unmanned vehicle does not support MAVLink instructions/does support Protocol1 instructions).

In this case, the apparatus is arranged to receive a second mission control message for sending to a second unmanned vehicle, wherein the first and second unmanned vehicle form at least part of a swarm of unmanned vehicles.

The apparatus is arranged to select a second control protocol from at least two control protocols for sending the second mission control message to the second unmanned vehicle in dependence on a determined capability of the second unmanned vehicle, the second control protocol being different to the first control protocol.

The apparatus is arranged to send the second mission control message to the second unmanned vehicle using the selected second control protocol.

Thus, such a system allows for a ground control station to control unmanned vehicles having different protocol requirements to behave as part of the same swarm. This means that, for example, the mission control information transmitted to an unmanned vehicle may be conveyed using a different application layer control protocol to the mission control information transmitted to another unmanned vehicle, allowing for unmanned vehicles having disparate programming to be controlled to act to achieve the same mission/task. The mission control information may be any of the mission control information transmitted to the leader of the swarm and the backup mission control information transmitted to non-leaders of the swarm.

Once the mission control protocol has been selected, the mission control messages may be packaged into a suitable transport layer protocol and transmitted to the associated unmanned vehicles. The transmission may be effected by any suitable mechanism (such as over wired or wireless communication networks), and using any suitable transport protocol mechanism. When transmission is via an Internet Protocol (IP) mechanism, the transport protocol may be a connectionless protocol, such as user datagram packet (UDP).

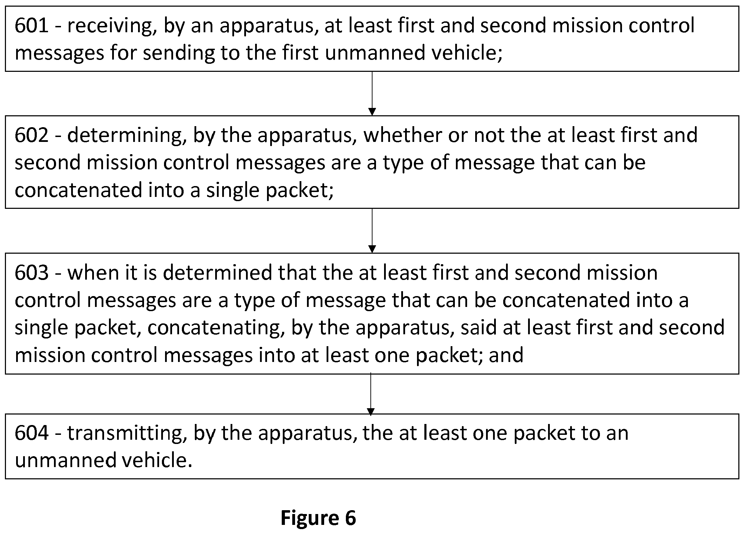

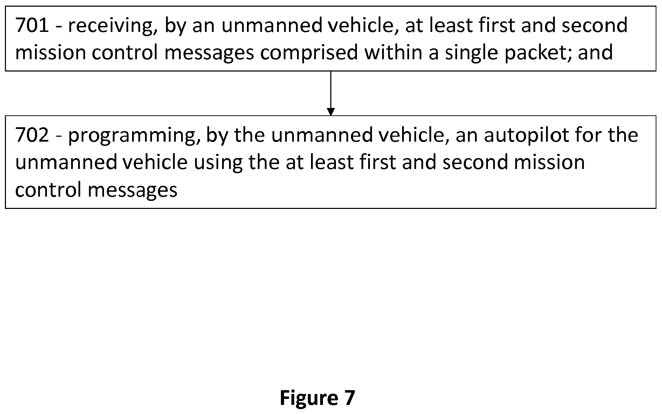

A second aspect is described in relation to Figures 6 and 7, which respectively relate to actions performed by an apparatus (such as a ground control station) and an unmanned vehicle.

In general, the second described aspect relates to optimising the efficiency of transmitting mission control messages from an apparatus to an unmanned vehicle and works to reduce the overhead in transmitting these messages.

At 601, an apparatus is arranged to receive at least first and second mission control messages (hereinafter referred to as a plurality of mission control messages) for sending to a first unmanned vehicle. As in the first aspect, the mission control messages may originate from the apparatus itself (e.g. as a result of an operator of the apparatus inputting an instruction to the apparatus). In this case, the mission control message is received from another part of the apparatus, such as a user interface. The mission control message may originate from an external apparatus, and be transmitted to the apparatus from the external apparatus using a physical layer mechanism.

At 602, the apparatus is arranged to determine whether or not the plurality of mission control messages are a type of message that can be concatenated into a single packet. This is described using a particular example below.

When it is determined that the plurality of mission control messages are a type of message that can be concatenated into a single packet, at 603 the apparatus is arranged to concatenate said plurality of mission control messages into at least one packet. The concatenating may comprise concatenating the plurality of mission control messages into a single packet, and may comprise concatenating the plurality of mission control messages into a single array (e.g. one long byte array). For example, the plurality of MAVLink messages may be encoded into arrays of bytes, which are later concatenated into one long byte array. This long byte array may be sent to an unmanned vehicle using an appropriate transport protocol (such as, for example, UDP). The concatenating may comprise concatenating the plurality of mission control messages into a plurality of packets. This is illustrated below in an example.

At 603, the apparatus is arranged to transmit the at least one packet to an unmanned vehicle. Where the plurality of mission control messages are concatenated into a plurality of packets, the apparatus may be further arranged to transmit each of the plurality of packets such that there is a minimum, predetermined delay between each transmission.

The apparatus may be arranged to receive a plurality of acknowledgements for the plurality of mission control messages. Each acknowledgement may uniquely corresponding to a respective one of the plurality of mission control messages.

Before describing corresponding actions that may be performed by the interrelated receiver of this at least one packet (i.e. the unmanned vehicle referred to in 603), an example of this system is now described.

A ground control station is arranged to send an onboard computer of an unmanned vehicle) a variety of commands. Some commands are short and/or require urgent attention (such as a command for stopping the unmanned vehicle) and so should be sent alone as soon as possible. Other commands may be much longer in form (such as detailing a plurality of waypoint locations for a mission).

Messages for a single unmanned vehicle are traditionally sent using separate packets. For the MAVLink protocol, the following messages may be sent to an unmanned vehicle to program a mission comprising three waypoints:
- The ground control station sends, to an unmanned vehicle, a MISSION_COUNT message that contains the amount of waypoints.
- The unmanned vehicle responds with an acknowledgement of this message.
- The ground control station sends, to the unmanned vehicle, a MISSION_ITEM message that contains coordinates and parameters for a first waypoint.
- The unmanned vehicle responds with an acknowledgement of this message.
- The ground control station sends, to the unmanned vehicle, a MISSION_ITEM message that contains coordinates and parameters for a second waypoint.
- The unmanned vehicle responds with an acknowledgement of this message.
- The ground control station sends, to the unmanned vehicle, a MISSION_ITEM message that contains coordinates and parameters for a third waypoint.
- The unmanned vehicle responds with an acknowledgement of this message.
- The ground control station sends, to the unmanned vehicle, a MISSION_ACK message that indicates that the last waypoint has been transmitted.
- The unmanned vehicle responds with an acknowledgement of this message.

The inventor has realised that several of these messages may be concatenated into a single packet for transmission to the unmanned vehicle, thereby allowing the information to be transmitted faster and to save processing energy at the unmanned vehicle (which is frequently battery operated).

Thus, after the various mission control messages have been generated at the ground control station, the ground control station may be configured to determine whether any of those messages are of a type that may be concatenated (e.g. non-urgent messages). At least some of those messages may then be concatenated such that a plurality of them may be transmitted in a single packet. The concatenated messages may be concatenated into one long byte array.

On receipt of a packet comprising concatenated messages, the unmanned vehicle may be arranged to provide acknowledgments for each of the concatenated messages. Each of the acknowledgements transmitted by the unmanned vehicle for each of the concatenated messages may be transmitted separately to each other.

Thus, the communication for the above example may, under the presently described scheme, be as follows:
First, the ground control station is arranged to transmit a single packet comprising: MISSION_COUNT+MISSION_ITEM+MISSION_ITEM+MISSION+ITEM+MISSION_ ACK.

In response to this packet, the unmanned vehicle is arranged to transmit five separate acknowledgements, one for each concatenated message comprised within the packet.

For very large missions (e.g. more than 40 waypoints), it may not be possible to successfully concatenate all of the waypoint messages into a single packet. This may be because of the processing capability of the unmanned vehicle. Therefore, the messages to be concatenated may be split up and sent using multiple packets, such that each of the multiple packets comprises a plurality of concatenated mission control messages. The ground control station may be configured to wait between transmissions of the multiple packets in order to enable the unmanned vehicle's autopilot the opportunity to receive and process the multiple packets.

Actions performed by the interrelated receiver of this at least one packet (i.e. the unmanned vehicle referred to in 603) are now described with respect to Figure 7.

At 701, the unmanned vehicle is arranged to receive a plurality of mission control messages comprised within a single packet.

At 702, in response to receipt of this single packet, the unmanned vehicle is arranged to program an autopilot of the unmanned vehicle using the plurality of mission control messages.

The unmanned vehicle may be arranged to transmit a plurality of acknowledgements, each acknowledgement corresponding to a respective one of the plurality of mission control messages. The plurality of mission control messages may be comprised within the single packet in a single array, such as a long byte array.

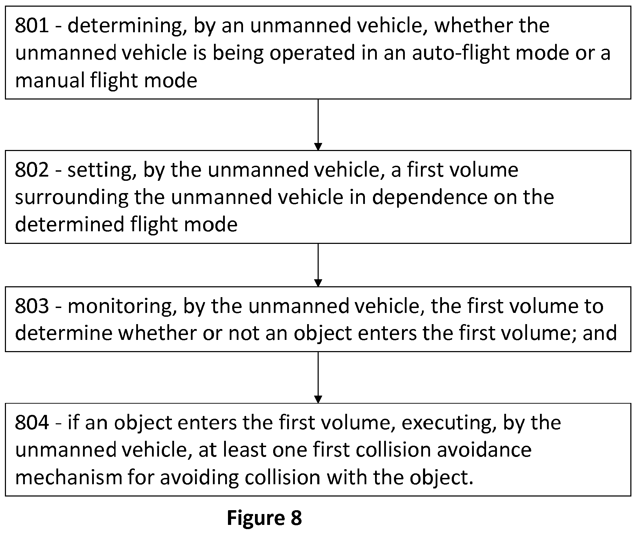

A third aspect is now described. The third aspect relates to collision avoidance mechanisms for an unmanned vehicle acting as part of a swarm of unmanned vehicles. This aspect is described with reference to Figure 8, which describes various actions that may be performed by an unmanned vehicle in a swarm.

At 801, the unmanned vehicle is arranged to determine whether the unmanned vehicle is being operated in an auto-flight mode or a manual flight mode.

At 802, the unmanned vehicle is arranged to set vehicle, a first volume surrounding the unmanned vehicle in dependence on the determined flight mode. The first volume may have a first size and a first shape. The first size and shape may be set based on the context of the unmanned vehicle. For example, the context may comprise at least one of the location of the unmanned vehicle, the altitude of the unmanned vehicle, the heading/velocity of the unmanned vehicle, and a flight mode of the unmanned vehicle (e.g. whether the unmanned vehicle is operating in an automatic/autopilot mode, or whether the unmanned vehicle is operating in a manual mode). Thus, for example, the size of the first volume may increase with increasing speeds of the unmanned vehicle. The first volume may wholly or only partially surround the unmanned vehicle.

At 803, the unmanned vehicle is arranged to monitor the first volume to determine whether or not an object enters the first volume.

If an object enters the first volume, at 805 the unmanned vehicle is arranged to execute at least one first collision avoidance mechanism for avoiding collision with the object. If no object enters the first volume, the unmanned vehicle continues to monitor the first volume (i.e. the unmanned vehicle does not execute that at least one first collision avoidance mechanism).

In some swarm systems, an unmanned vehicle is configured to define a three dimensional safety boundary. If an object enters this safety boundary, then collision avoidance mechanisms may be executed to avoid this. Collision avoidance mechanisms may involve at least one of a deviation in translational motion or rotational orientation from the navigational course that was configured immediately prior to detection of the object.

As a further example, the unmanned vehicle may be arranged to set two volumes to monitor, one of the volumes being smaller than the other volume (and preferable being wholly enclosed by the other volume). This second (smaller) volume may be treated as a failsafe mechanism, such that at least one collision avoidance mechanism is executed automatically in response to detection of an object within the smaller volume. The failsafe mechanism may operate regardless of whether the unmanned vehicle is operating in a manual mode (e.g. under direct, real-time operator control) or in an autopilot mode.

Thus, the unmanned vehicle may be arranged to set a second volume surrounding the unmanned vehicle in dependence on the determined flight mode, the second volume being smaller than the first volume. The second volume may have a second size and a second shape. The second size and the second shape may be determined/selected in dependence on the context of the unmanned vehicle. Subsequent to setting the second volume, the unmanned vehicle may be arranged to monitor second volume to determine whether or not the object enters the second volume. If an object enters the second volume, the unmanned vehicle may be arranged to execute at least one second collision avoidance mechanism for avoiding collision with the object.

The second collision avoidance mechanism may be different to the first collision avoidance mechanism. For example, the first collision avoidance mechanism may depend on notifying an operator of the system of the detected object and waiting from an explicit instruction from the operator for how to avoid the detected object. In contrast, the second collision avoidance mechanism may be an automatic action that does not depend on notifying a user of the detected object. Therefore, the first collision avoidance mechanism may comprise notifying a user/operator of the unmanned vehicle of the object entering the first volume, and receiving an explicit instruction from the user instructing the unmanned vehicle how to avoid colliding with the object. The second collision avoidance mechanism may comprise automatically moving to avoid colliding with the object without user input.

It is understood that other unmanned vehicles within the same swarm may be executing similar principles/safety volumes. This knowledge may be used by the unmanned vehicle to perform collision avoidance mechanisms when it has determined that it has entered another unmanned vehicle's monitored volume. The size and shape of the volumes monitored by the another unmanned vehicle may be different to the size and shape of any volumes monitored by the unmanned vehicle. This may be, for example, the another unmanned vehicle is operating in another context. As an example, the unmanned vehicle may thus determine whether another unmanned vehicle is being operated in an auto-flight mode or a manual flight mode. Determining whether another unmanned vehicle is being operated in an auto-flight mode or a manual flight mode comprises receiving information on the flight mode from at least one of the another unmanned vehicle and a ground control station. The unmanned vehicle may subsequently set a first volume and a second volume surrounding the another unmanned vehicle in dependence on the determined flight mode of the another unmanned vehicle. The unmanned vehicle may subsequently detect that the unmanned vehicle has entered at least one of the first and second volumes of the another unmanned vehicle, and, in dependence on which of the first and second volumes of the another unmanned vehicle that the unmanned vehicle has entered, may select and execute a collision avoidance mechanism for avoiding collision with the another unmanned vehicle.

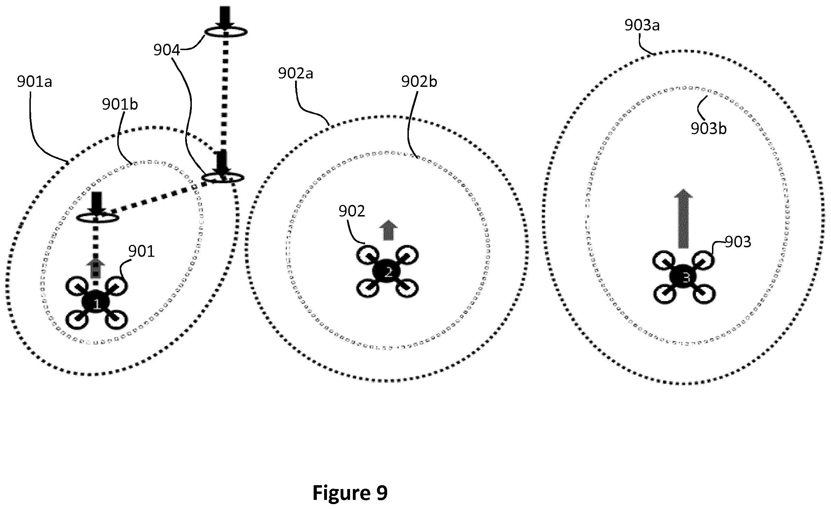

To illustrate this, Figure 9 is provided. Figure 9 shows three unmanned vehicles 901, 902, 903, each unmanned vehicle being arranged to monitor two respective volumes (depicted as dotted lines in Figure 9 that completely enclose their respective unmanned vehicles). The first unmanned vehicle 901 is arranged to monitor volumes 901a and 901b. The second unmanned vehicle 902 is arranged to monitor volumes 902a, 902b. The third unmanned vehicle is arranged to monitor volumes 903a, 903b. Above each unmanned vehicle is an arrow representing the velocity of the respective unmanned vehicle.

The first unmanned vehicle 901 is located at a different place to the other unmanned vehicles 902, 903 and so has differently shaped and sized volumes 901a, 901b to the second and third unmanned vehicles 902, 903.

The third unmanned vehicle 903 is shown as having a bigger velocity than the first and second unmanned vehicles 901, 902m and so has a larger size than these unmanned vehicles. Further, the shape of the volumes 903a, 903b monitored by the third unmanned vehicle is more ovaloid than those volumes 902a, 902b monitored by the second unmanned vehicle 902. This is a result of the depicted greater velocity of the third unmanned vehicle 903. The shape of any of the volumes monitored may be generated by a ground control station/apparatus based on map data (the shapes may alternatively be generated by an onboard computer of the unmanned vehicle). For example, once the route to at least one waypoint has been determined for a particular unmanned vehicle, map data associated with that route may be retrieved and used to provide default shapes to be monitored by that unmanned vehicle. The default shape monitored may thus depend on the physical location and waypoints and/or on the routes between waypoints. The default shape monitored may further be changed during operation of the monitoring unmanned vehicle in dependence on the current physical location of the monitoring unmanned vehicle.

Also shown in Figure 9 is a dotted line comprising solidly-lined circles that represent an object 904 that has entered/is entering the first and second volumes 901a, 901b of the first unmanned vehicle. As described above, the first unmanned vehicle may be configured to notify an operator when the object 904 enters the outer volume 901a to await instructions for performing collision avoidance, whilst the first unmanned vehicle may be configured to automatically execute a collision avoidance mechanism when the object 904 is detected within the inner volume 901b.

As discussed above, all of the above-mentioned aspects may be implemented in the same system.

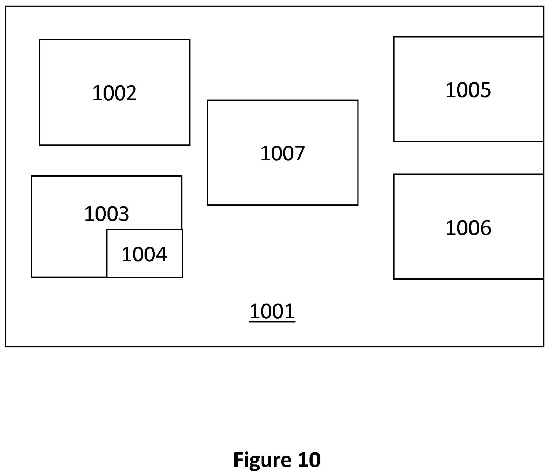

An example apparatus that may execute any of the above-mentioned aspects is illustrated with respect to Figure 10. This apparatus may embody any of a ground control station and an unmanned vehicle.

Figure 9 illustrates an apparatus 1001 comprising at least one processor 1002 and at least one memory 1003. The at least one memory 1003 comprises computer code 1004 that, when executed on the at least one processor 1002, causes the apparatus to perform at least one of the above-described aspects. The apparatus further comprises receiving circuitry 1005 and transmitting circuitry 1006. It is understood that although the receiving circuitry 1005 and transmitting circuitry 1006 are shown as separate, independent circuitry, that at least some components may be shared between them.

The apparatus 1001 further comprises an energy source 1007. The energy source may be embodied in a variety of different ways. For example, the apparatus may be powered by electrical energy or by a chemical fuel. Electrical energy may be stored in an energy storage arrangement, such as for example a battery or ultracapacitor. In some embodiments, the apparatus may be arranged to receive electrical power via a cable while in active operation/whilst executing a mission, providing effectively unlimited flying time but with range limited by the length of the cable. In some embodiments, the energy source may be provided by photovoltaic cells which power, in part or in full from light. Chemical fuel may be stored in the apparatus in a tank or other kind of suitable arrangement. Chemical fuel may comprise, for example, hydrogen for generating electrical energy on board in a fuel cell, or a combustible hydrocarbon fuel for combustion in a generator to generate electricity, and/or an engine to power the apparatus directly.

In the above, reference has been made to "*first*" and "*second*" mission control messages and the like. It is understood that the use of these terms is merely to distinguish between different mission control messages, and does not imply any temporal relationship between the mission control messages for at least transmission, receipt and generation of these messages. In other words, the use of the terms first and second mission control messages does not denote that these messages are necessarily transmitted, received or concatenated in any particular order or sequence. Consequently, references in the above to first and second mission control messages may be replaced by references to a plurality of mission control messages without any loss of generality.

Throughout the above Figures, a fixed spatial relationship has been shown between unmanned vehicles in a swarm. However, it is understood that these unmanned vehicles may take any formation, and the above-described examples are not limited in this regard. In other words, the spatial relationship (and/or the rotational relationship) between unmanned vehicles in a swarm may be configured to vary.

Further, the above-described Figures depict an unmanned vehicle as comprising four rotors. Aside from the above described systems also being applicable to ground systems (and thus not needing to comprise any rotors), the unmanned vehicles may instead comprise a single rotor or any other number of rotors (i.e. be multirotor). It is also unnecessary for an unmanned aerial vehicle to comprise rotors. For example, an unmanned vehicle may be a lighter-than-air gas balloon with thrusters, a miniature aircraft, miniature helicopter or even a full-sized light aircraft.

The above discussed issues are not limited to any particular communication environment, but may occur in any appropriate communication system. Some embodiments may for example be used in 4G and/or 5G, for example new radio/5G technologies or similar technologies.

The required data processing apparatus and functions may be provided by means of one or more data processors. The described functions may be provided by separate processors or by an integrated processor. The data processors may be of any type suitable to the local technical environment, and may include one or more of general purpose computers, special purpose computers, microprocessors, digital signal processors (DSPs), application specific integrated circuits (ASystem InformationC), gate level circuits and processors based on multi core processor architecture, as nonlimiting examples. The data processing may be distributed across several data processing modules. A data processor may be provided by means of, for example, at least one chip. Appropriate memory capacity can be provided in the relevant devices. The memory or memories may be of any type suitable to the local technical environment and may be implemented using any suitable data storage technology, such as semiconductor based memory devices, magnetic memory devices and systems, optical memory devices and systems, fixed memory and removable memory. One or more of the steps discussed in relation to Figures 6 and/or 11 may be performed by one or more processors in conjunction with one or more memories. An appropriately adapted computer program code product or products may be used for implementing the embodiments, when loaded or otherwise provided on an appropriate data processing apparatus. The program code product for providing the operation may be stored on, provided and embodied by means of an appropriate carrier medium. An appropriate computer program can be embodied on a computer readable record medium. A possibility is to download the program code product via a data network. In general, the various embodiments may be implemented in hardware or special purpose circuits, software, logic or any combination thereof. Embodiments of the inventions may thus be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

It is noted that whilst embodiments have been described in relation to certain architectures, similar principles can be applied to other systems. Therefore, although certain embodiments were described above by way of example with reference to certain exemplifying architectures for wireless networks, technologies and standards, embodiments may be applied to any other suitable forms of communication systems than those illustrated and described herein. It is also noted that different combinations of different embodiments are possible.

## Claims

1. A method comprising:
receiving (501), by an apparatus (101), a first mission control message for sending to a first unmanned vehicle (102);
selecting (502), by the apparatus (101), a first application layer control protocol from at least two application layer control protocols for sending the first mission control message to the first unmanned vehicle (102) in dependence on a determined capability of the first unmanned vehicle (102), **characterized in that** the determined capability of the first unmanned vehicle (102) relates, at least in part, to a determination as to whether or not the first unmanned vehicle (102) is configured to autonomously execute collision avoidance mechanism and the determined capability of the first unmanned vehicle (102) relates to the ability of the first unmanned vehicle to translate instructions received in accordance with the at least two protocols; and
sending (503), by the apparatus (101), the first mission control message to the first unmanned vehicle (102) using the selected first application layer control protocol.

2. A method as claimed in claim 1, wherein the receiving further comprises receiving (601), by the apparatus (101), a second mission control message for sending to the first unmanned vehicle (102), and wherein the method further comprises:
determining (602), by the apparatus (101), whether or not the first and second mission control messages are a type of message that can be concatenated into a single packet, wherein non-urgent messages may be concatenated into a single packet and wherein short and/or urgent messages may not be concatenated into a single packet;
when it is determined that the first and second mission control messages are a type of message that can be concatenated into a single packet, concatenating (603), by the apparatus (101), said first and second mission control messages into at least one packet; and
transmitting (603), by the apparatus (101), the at least one packet to an unmanned vehicle (102).

3. A method as claimed in claim 2, wherein said concatenating comprises concatenating the first and second mission control messages into a single array.

4. A method as claimed in claim 3, wherein said concatenating comprises concatenating the first and second mission control messages into a plurality of packets.

5. A method as claimed in claim 4, further comprising transmitting each of the plurality of packets such that there is a minimum, predetermined delay between each transmission.

6. A method as claimed in any of claims 2 to 5, further comprising receiving a plurality of acknowledgements from the first unmanned vehicle (102), each acknowledgement corresponding to a respective one of the first and second mission control messages.

7. A method as claimed in any of claims 2 to 6, wherein receipt of the at least first and second mission control messages comprised within a single packet causes the unmanned vehicle (102) to program an autopilot for the unmanned vehicle (102) using the first and second mission control messages.

8. A method as claimed in any preceding claim, further comprising;
receiving, by the apparatus (101), a further mission control message for sending to a second unmanned vehicle (102), wherein the first and second unmanned vehicle (102) form at least part of a swarm of unmanned vehicles (102);
selecting, by the apparatus (101), a second application layer control protocol from at least two application layer control protocols for sending the further mission control message to the second unmanned vehicle (102) in dependence on a determined capability of the second unmanned vehicle (102); and
sending, by the apparatus (101), the further mission control message to the second unmanned vehicle (102) using the selected second application layer control protocol.

9. An apparatus (101) comprising:
at least one processor; and
at least one memory comprising computer code that, when executed by the at least one processor, causes the apparatus (101) to perform the steps of any of claims 1 to 8.

10. A computer program comprising computer executable instructions, which when executed by a computer, cause the computer to perform each of the method steps of any of claims 1 to 8.

## Patentansprüche

1. Verfahren, das Folgendes umfasst:
Empfangen (501) einer ersten Missionssteuernachricht durch eine Vorrichtung (101) zum Senden an ein erstes unbemanntes Fahrzeug (102);
Auswählen (502) eines ersten Anwendungsschichtsteuerprotokolls aus mindestens zwei Anwendungsschichtsteuerprotokollen durch die Vorrichtung (101) zum Senden der ersten Missionssteuernachricht in Abhängigkeit von einer bestimmten Fähigkeit des ersten unbemannten Fahrzeugs (102) an das erste unbemannte Fahrzeug (102), **dadurch gekennzeichnet, dass** die bestimmte Fähigkeit des ersten unbemannten Fahrzeugs (102) mindestens teilweise eine Bestimmung betrifft, ob das erste unbemannte Fahrzeug (102) dazu ausgelegt ist, einen Kollisionsvermeidungsmechanismus autonom auszuführen, oder nicht, und die bestimmte Fähigkeit des ersten unbemannten Fahrzeugs (102) das Vermögen des ersten unbemannten Fahrzeugs zum Umsetzen von Anweisungen, die gemäß den mindestens zwei Protokollen empfangen werden; betrifft; und
Senden (503) der ersten Missionssteuernachricht durch die Vorrichtung (101) an das erste unbemannte Fahrzeug (102) unter Verwendung des ausgewählten ersten Anwendungsschichtsteuerprotokolls.

2. Verfahren nach Anspruch 1, wobei das Empfangen ferner das Empfangen (601) einer zweiten Missionssteuernachricht zum Senden an das erste unbemannte Fahrzeug (102) durch die Vorrichtung (101) umfasst, und wobei das Verfahren ferner Folgendes umfasst:
Bestimmen (602) durch die Vorrichtung (101), ob die erste und die zweite Missionssteuernachricht eine Art von Nachricht sind, die zu einem einzelnen Paket verkettet werden können oder nicht, wobei nicht dringende Nachrichten zu einem einzelnen Paket verkettet werden können und wobei kurze und/oder dringende Nachrichten nicht zu einem einzelnen Paket verkettet werden können;
wenn bestimmt wird, dass die erste und die zweite Missionssteuernachricht eine Art von Nachricht sind, die zu einem einzelnen Paket verkettet werden können, Verketten (603) der ersten und der zweiten Missionssteuernachricht durch die Vorrichtung (101) zu mindestens einem Paket; und
Übertragen (603) des mindestens einen Pakets durch die Vorrichtung (101) zu einem unbemannten Fahrzeug (102).

3. Verfahren nach Anspruch 2, wobei das Verketten das Verketten der ersten und der zweiten Missionssteuernachricht zu einem einzelnen Array umfasst.

4. Verfahren nach Anspruch 3, wobei das Verketten das Verketten der ersten und der zweiten Missionssteuernachricht zu einer Vielzahl von Paketen umfasst.

5. Verfahren nach Anspruch 4, das ferner das Übertragen von jedem der Vielzahl von Paketen umfasst, derart, dass zwischen jeder Übertragung eine minimale vorbestimmte Verzögerung besteht.

6. Verfahren nach einem der Ansprüche 2 bis 5, das ferner das Empfangen einer Vielzahl von Bestätigungen vom ersten unbemannten Fahrzeug (102) umfasst, wobei jede Bestätigung einer jeweiligen der ersten und zweiten Missionssteuernachricht entspricht.

7. Verfahren nach einem der Ansprüche 2 bis 6, wobei der Empfang der mindestens ersten und zweiten Missionssteuernachricht, die in einem einzelnen Paket umfasst sind, bewirkt, dass das unbemannte Fahrzeug (102) unter Verwendung der ersten und der zweiten Missionssteuernachricht einen Autopiloten für das unbemannte Fahrzeug (102) programmiert.

8. Verfahren nach einem der vorhergehenden Ansprüche, das ferner Folgendes umfasst;
Empfangen einer weiteren Missionssteuernachricht durch die Vorrichtung (101) zum Senden an ein zweites unbemanntes Fahrzeug (102), wobei das erste und das zweite unbemannte Fahrzeug (102) mindestens einen Teil einer Gruppe von unbemannten Fahrzeugen (102) bilden;
Auswählen eines zweiten Anwendungsschichtsteuerprotokolls durch die Vorrichtung (101) aus mindestens zwei Anwendungsschichtsteuerprotokollen zum Senden der weiteren Missionssteuernachricht in Abhängigkeit von einer bestimmten Fähigkeit des zweiten unbemannten Fahrzeugs (102) an das zweite unbemannte Fahrzeug (102); und
Senden der weiteren Missionssteuernachricht durch die Vorrichtung (101) an das zweite unbemannte Fahrzeug (102) unter Verwendung des ausgewählten zweiten Anwendungsschichtsteuerprotokolls.

9. Vorrichtung (101), die Folgendes umfasst:
mindestens einen Prozessor; und
mindestens einen Speicher, der einen Computercode umfasst, der, wenn er von dem mindestens einen Prozessor ausgeführt wird, bewirkt, dass die Vorrichtung (101) die Schritte von jedem der Ansprüche 1 bis 8 durchführt.

10. Computerprogramm, das computerausführbare Anweisungen umfasst, die, wenn sie von einem Computer ausgeführt werden, bewirken, dass der Computer jeden der Verfahrensschritte von einem der Ansprüche 1 bis 8 durchführt.

## Revendications

1. Procédé comprenant :
la réception (501), par un appareil (101), d'un premier message de commande de mission à envoyer à un premier véhicule sans pilote (102) ;
la sélection (502), par l'appareil (101), d'un premier protocole de commande de couche d'application parmi au moins deux protocoles de commande de couche d'application pour envoyer le premier message de commande de mission au premier véhicule sans pilote (102) en fonction d'une capacité déterminée du premier véhicule sans pilote (102), **caractérisé en ce que** la capacité déterminée du premier véhicule sans pilote (102) se rapporte au moins en partie à la détermination précisant si le premier véhicule sans pilote (102) est configuré ou non pour exécuter de manière autonome un mécanisme d'évitement des collisions, et la capacité déterminée du premier véhicule sans pilote (102) se rapporte à l'aptitude du premier véhicule sans pilote à traduire des instructions reçues conformément aux au moins deux protocoles ; et
l'envoi (503), par l'appareil (101), du premier message de commande de mission au premier véhicule sans pilote (102) à l'aide du premier protocole de commande de couche d'application sélectionné.

2. Procédé selon la revendication 1, dans lequel la réception comprend en outre la réception (601), par l'appareil (101), d'un deuxième message de commande de mission à envoyer au premier véhicule sans pilote (102), et dans lequel le procédé comprend en outre :
la détermination (602), par l'appareil (101), précisant si les premier et deuxième messages de commande de mission sont ou non un type de message qui peut être concaténé en un seul paquet, dans lequel les messages non urgents peuvent être concaténés en un seul paquet, et dans lequel les messages courts et/ou urgents ne peuvent pas être concaténés en un seul paquet ;
lorsqu'il est déterminé que les premier et deuxième messages de commande de mission sont un type de message qui peut être concaténé en un seul paquet, la concaténation (603), par l'appareil (101), desdits premier et deuxième messages de commande de mission en au moins un paquet ; et
la transmission (603), par l'appareil (101), de l'au moins un paquet à un véhicule sans pilote (102).

3. Procédé selon la revendication 2, dans lequel ladite concaténation comprend la concaténation des premier et deuxième messages de commande de mission en un seul tableau.

4. Procédé selon la revendication 3, dans lequel ladite concaténation comprend la concaténation des premier et deuxième messages de commande de mission en une pluralité de paquets.

5. Procédé selon la revendication 4, comprenant en outre la transmission de chacun de la pluralité de paquets de manière à ce qu'il y ait un délai minimal prédéterminé entre chaque transmission.

6. Procédé selon l'une des revendications 2 à 5, comprenant en outre la réception d'une pluralité d'accusés de réception du premier véhicule sans pilote (102), chaque accusé de réception correspondant à un message de commande de mission respectif des premier et deuxième messages de commande de mission.

7. Procédé selon l'une des revendications 2 à 6, dans lequel la réception des au moins premier et deuxième messages de commande de mission compris dans un seul paquet amène le véhicule sans pilote (102) à programmer un pilote automatique pour le véhicule sans pilote (102) à l'aide des premier et deuxième messages de commande de mission.

8. Procédé selon l'une des revendications précédentes, comprenant en outre ;
la réception, par l'appareil (101), d'un messages de commande de mission supplémentaire à envoyer à un deuxième véhicule sans pilote (102), dans lequel les premier et deuxième véhicules sans pilote (102) forment au moins une partie d'un essaim de véhicules sans pilote (102) ;
la sélection, par l'appareil (101), d'un deuxième protocole de commande de couche d'application parmi au moins deux protocoles de commande de couche d'application pour envoyer le messages de commande de mission supplémentaire au deuxième véhicule sans pilote (102) en fonction d'une capacité déterminée du deuxième véhicule sans pilote (102) ; et
l'envoi, par l'appareil (101), du messages de commande de mission supplémentaire au deuxième véhicule sans pilote (102) à l'aide du deuxième protocole de commande de couche d'application sélectionné.

9. Appareil (101) comprenant :
au moins un processeur ; et
au moins une mémoire comprenant un code informatique qui, lorsqu'il est exécuté par l'au moins un processeur, amène l'appareil (101) à réaliser les étapes de l'une des revendications 1 à 8.

10. Programme informatique comprenant des instructions exécutables par ordinateur qui, lorsqu'elles sont exécutées par un ordinateur, amènent l'ordinateur à réaliser chacune des étapes de procédé de l'une des revendications 1 à 8.
